(19)

Europäisches
Patentamt

European
Patent Office

Office européen
des brevets

(11) **EP 3 531 771 B1**

(12) **EUROPEAN PATENT SPECIFICATION**

(45) Date of publication and mention
of the grant of the patent:
**07.10.2020 Bulletin 2020/41**

(21) Application number: **17890499.1**

(22) Date of filing: **20.12.2017**

(51) Int Cl.:
*H04L 5/00* [(2006.01)]   *H04W 72/04* [(2009.01)]

(86) International application number:
**PCT/CN2017/117448**

(87) International publication number:
**WO 2018/126889 (12.07.2018 Gazette 2018/28)**

(54) **WIRELESS COMMUNICATION USING MULTIPLE ACCESS TECHNIQUES**

DRAHTLOSE KOMMUNIKATION UNTER VERWENDUNG VON
MEHRFACHZUGRIFFSTECHNIKEN

COMMUNICATION SANS FIL EN UTILISANT DES TECHNIQUE À ACCÈS MULTIPLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.01.2017 CN 201710008129**

(43) Date of publication of application:
**28.08.2019 Bulletin 2019/35**

(73) Proprietor: **Huawei Technologies Co., Ltd.
Longgang District
Shenzhen, Guangdong 518129 (CN)**

(72) Inventors:
• **MENG, Xiangming
Shenzhen
Guangdong 518129 (CN)**
• **CHEN, Yan
Shenzhen
Guangdong 518129 (CN)**
• **WU, Yiqun
Shenzhen
Guangdong 518129 (CN)**
• **BAYESTEH, Alireza
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
**CN-A- 102 404 854   CN-A- 105 763 288
CN-A- 105 792 360   US-A1- 2014 133 395**

• **SPREADTRUM COMMUNICATIONS:
"Considerations on pre-configured resource for
grant-free based UL non-orthogonal MA", 3GPP
DRAFT; R1-1608919 , vol. RAN WG1, no. Lisbon,
Portugal; 20161010 - 20161014 9 October 2016
(2016-10-09), XP051148973, Retrieved from the
Internet:
URL:http://www.3gpp.org/ftp/Meetings_3GPP_
SYNC/RAN1/Docs/ [retrieved on 2016-10-09]**
• **LG ELECTRONICS: "Discussion on feedback
signaling for grant-free MA", 3GPP DRAFT;
R1-1609226 , vol. RAN WG1, no. Lisbon, Portugal;
20161010 - 20161014 9 October 2016 (2016-10-09),
XP051149272, Retrieved from the Internet:
URL:http://www.3gpp.org/ftp/Meetings_3GPP_
SYNC/RAN1/Docs/ [retrieved on 2016-10-09]**
• **LG ELECTRONICS: "General procedures for
grant-free/grant-based MA", 3GPP DRAFT;
R1-1609228 , vol. RAN WG1, no. Lisbon, Portugal;
20161010 - 20161014 9 October 2016 (2016-10-09),
XP051149274, Retrieved from the Internet:
URL:http://www.3gpp.org/ftp/Meetings_3GPP_
SYNC/RAN1/Docs/ [retrieved on 2016-10-09]**

## Description

This application claims priority to Chinese Patent Application No. 201710008129.0, filed with the Chinese Patent Office on January 5, 2017 and entitled "DATA TRANSMISSION METHOD AND APPARATUS".

## TECHNICAL FIELD

Embodiments of this application relate to the communications field, and in particular, to a data transmission method and apparatus in the communications field.

## BACKGROUND

Enhanced mobile broadband (enhanced mobile broadband, eMBB) and ultra-reliable and low latency communications (ultra-reliable low latency communication, URLLC) are two important scenarios in a future network system. Compared with an existing mobile broadband service scenario, the eMBB further improves performance such as a system capacity, and enhances user experience. The eMBB corresponds to a high-traffic mobile broadband service such as a 3D/ultra-high definition video. For services such as Internet of Vehicles, unmanned driving, and industrial control, the system capacity is no longer a major issue, but a quite high requirement is imposed on latency and reliability. The URLLC can meet such the requirement for a low-latency and high-reliability communications service. Because of limited available resources, if an eMBB terminal device and a URLLC terminal device simultaneously send data on a same physical resource, it is difficult for a network device to detect the data sent by the two terminal devices. Consequently, data transmission performance is relatively poor. The document SPREADTRUM COMMUNICATIONS: "Considerations on pre-configured resource for grant-free based UL non-orthogonal MA",3GPP DRAFT; RI-1608919, RAN WG1, Lisbon, Portugal, October 2016, proposes to group UEs into several groups and multiple UEs can transmit on the same physical resource by employing different MA signatures. The Document LG ELECTRONICS: "Discussion on feedback signaling for grant-free MA", 3GPP DRAFT; R1-1609226, RAN WG1, Lisbon, Portugal, October 2016, discusses mapping rules of DMRS and MAS.

## SUMMARY

Embodiments of this application provide a data transmission method and apparatus according to the independent claims, so as to improve data transmission performance.

Aspects of the present invention are provided in the independent claims. Preferred embodiments are provided in the dependent claims.

The scope of the present invention is determined only by the scope of the appended claims. Any embodiment/aspect (of the invention/disclosure) referred to in this description and not fully falling within the scope of said appended claims is an example useful for understanding the present invention.

## BRIEF DESCRIPTION OF DRAWINGS

FIG. 1 is a schematic diagram of an application scenario according to an embodiment of this application;
FIG. 2 is a schematic diagram of a data transmission method according to an embodiment of this application;
FIG. 3 is a schematic block diagram of a data transmission apparatus according to an embodiment of this application;
FIG. 4 is a schematic block diagram of another data transmission apparatus according to an embodiment of this application;
FIG. 5 is a schematic block diagram of a data transmission system according to an embodiment of this application;
FIG. 6 is a schematic block diagram of a data transmission apparatus according to an embodiment of this application; and
FIG. 7 is a schematic block diagram of another data transmission apparatus according to an embodiment of this application.

## DESCRIPTION OF EMBODIMENTS

It should be understood that the technical solutions of the embodiments of this application may be applied to various communications systems, such as a Global System for Mobile Communications (Global System for Mobile Communications, GSM) system, a Code Division Multiple Access (Code Division Multiple Access, CDMA) system, a Wideband Code Division Multiple Access (Wideband Code Division Multiple Access, WCDMA) system, a general packet radio service (general packet radio service, GPRS), a Long Term Evolution (Long Term Evolution, LTE) system, an LTE frequency division duplex (frequency division duplex, FDD) system, LTE time division duplex (time division duplex, TDD), Universal Mobile Telecommunications System (Universal Mobile Telecommunications System, UMTS), a Worldwide Interoperability for Microwave Access (Worldwide Interoperability for Microwave Access, WiMAX) communications system, a wireless local area network (wireless local area network, WLAN), or a future fifth generation (the fifth generation, 5G) wireless communications system.

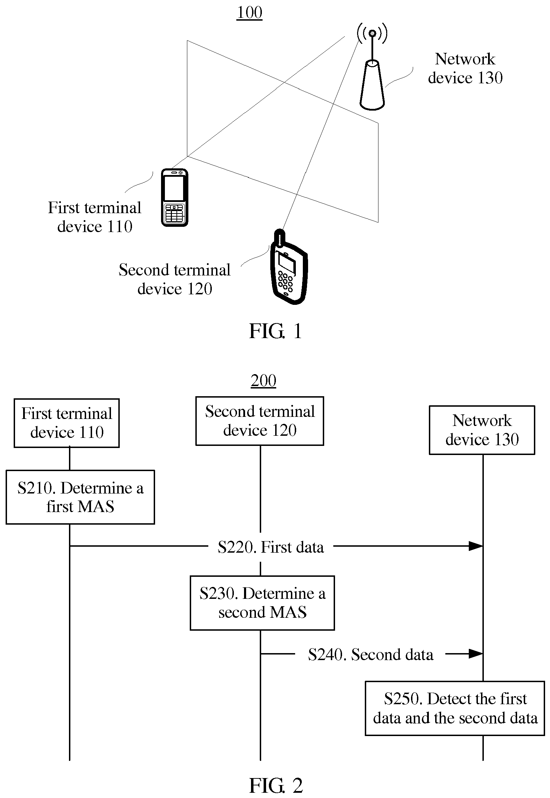

FIG. 1 is a schematic diagram of an application scenario according to an embodiment of this application, including:

> a first terminal device 110, configured to: generate first data based on a first MAS, and send the first data to a network device 130 on a multiplexing resource (a box in FIG. 1);
> a second terminal device 120, configured to: generate second data based on a second MAS, and send the second data to the network device 130 on the multiplexing resource; and
> the network device 130, configured to receive, on the multiplexing resource, the first data sent by the first terminal device 110 and the second data sent by the second terminal device 120.

In the prior art, when the first terminal device 110 and the second terminal device 120 send the first data and the second data to the network device 130 on the multiplexing resource, the first data and the second data interfere with each other, and the network device 130 cannot well detect the first data and the second data. Consequently, data transmission performance is relatively poor. In this embodiment of this application, the first MAS for generating the first data and the second MAS for generating the second data may include different DMRSs and/or different preamble sequences. In this way, when receiving the first data and the second data on the multiplexing resource, the network device 130 may jointly detect the first data and the second data by using the first MAS and the second MAS, so as to improve data transmission performance.

In this embodiment of this application, the first terminal device 110 may be a URLLC terminal device, and the second terminal device 120 may be an eMBB terminal device. Alternatively, the first terminal device 110 may be an eMBB terminal device, and the second terminal device 120 may be a URLLC terminal device. Alternatively, the first terminal device 110 may be an eMBB terminal device, and the second terminal device 120 may be an eMBB terminal device. Alternatively, the first terminal device 110 may be a URLLC terminal device, and the second terminal device 120 may be a URLLC terminal device. Devices what the first terminal device 110 and the second terminal device 120 are specifically are not limited in this embodiment of this application.

It should be understood that in this embodiment of this application, the first terminal device 110 and the second terminal device 120 may be referred to as user equipment (user equipment, UE), a terminal device, a mobile station (mobile station, MS), a mobile terminal (Mobile Terminal), a terminal device in a future 5G network, or the like. The terminal device may communicate with one or more core networks over a radio access network (radio access network, RAN). For example, the terminal may be a mobile phone (also referred to as a "cellular" phone) or a computer having a mobile terminal. For example, the terminal may be a portable, pocket-sized, handheld, computer built-in, or in-vehicle mobile apparatus, which exchanges voice and/or data with the radio access network.

It should be further understood that the network device 130 may be configured to communicate with a mobile device. The network device 130 may be a base transceiver station (base transceiver station, BTS) in GSM or CDMA, or may be a NodeB (NodeB, NB) in WCDMA, or may be an evolved NodeB (evolved node B, eNB or eNodeB) in LTE, or may be a relay station or an access point, or may be an in-vehicle device, a wearable device, or an access network device in a future 5G network.

FIG. 2 shows a data transmission method 200 according to an embodiment of this application. The method 200 includes the following steps.

S210. A first terminal device 110 determines a first MAS for sending first data.

In an optional embodiment, before S210, the method 200 includes: sending, by the network device 130, second indication information to the first terminal device 110; and receiving, by the first terminal device 110, the second indication information sent by the network device 130, where the second indication information is used to indicate a first MAS set; and S210 includes: determining, by the first terminal device 110, the first MAS set according to the second indication information; and determining, by the first terminal device 110, the first MAS in the first MAS set. Optionally, the first MAS set may not be indicated by using the second indication information sent by the network device 130, and may be a first MAS set specified in the protocol.

The first terminal device 110 determines the first MAS in the first MAS set in two manners.

In a first manner, when the first terminal device 110 works in an authorization mode, the network device 130 sends first indication information to the first terminal device 110. The first indication information is used to instruct the first terminal device 110 to send the data by using the first MAS in the first MAS set. The first terminal device 110 receives the first indication information sent by the network device 130, and the determining, by the first terminal device 110, the first MAS in the first MAS set includes: determining, by the first terminal device 110, the first MAS in the first MAS set according to the first indication information. Optionally, the first indication information may instruct the first terminal device 110 to send all data or only the first data by using the first MAS in the first MAS set.

In a second manner, when the first terminal device 110 works in an authorization-free mode, the first terminal device 110 determines the first MAS based on identification information of the first terminal device 110 and a MAS sequence number in the first MAS set. For example, the MAS sequence number in the MAS set may be 0, 1, ..., and K-1. Assuming that the identification information of the first terminal device 110 is N, the first terminal device 110 may select a $(mod(N, K))^{th}$ MAS for access, where mod is a modulo operation. Certainly, the MAS sequence number in the MAS set may also be a frame number, a slot number, a cell ID, or the like.

In an optional embodiment, after the first terminal device 110 determines the first MAS in the first MAS set, the first terminal device 110 sends a first DMRS and/or a preamble sequence in the first MAS set to the network device 130. The network device 130 receives the first DMRS and/or the first preamble sequence that are/is sent by the first terminal device 110.

In an optional embodiment, before S250, the method 200 further includes: determining, by the network device 130, the first MAS of the first terminal device 110. The determining, by the network device 130, the first MAS of the first terminal device 110 includes: determining, by the network device 130, the first MAS based on the first DMRS and/or the first preamble sequence and a first mapping relationship. The first mapping relationship is used to indicate a correspondence between a MAS and a DMRS and/or a preamble sequence that are/is sent by the first terminal device 110.

Specifically, the first terminal device 110 may work in an authorization-free mode, the network device 130 stores the first mapping relationship, and the first mapping relationship indicates the correspondence between a MAS and a DMRS and/or a preamble sequence. When selecting the first MAS, the first terminal device 110 sends the first DMRS and/or the first preamble sequence in the first MAS to the network device 130. When receiving the first DMRS and/or the first preamble sequence, the network device 130 finds, based on the stored first mapping relationship, the first MAS corresponding to the first DMRS and/or the first preamble sequence. It may be understood that the first mapping relationship is used to indicate a mapping relationship between the first DMRS and the first MAS, or the first mapping relationship is used to indicate a mapping relationship between the first preamble sequence and the first MAS, or the first mapping relationship is used to indicate a mapping relationship between the first preamble sequence as well as the first DMRS and the first MAS. Optionally, the protocol may specify that the first terminal device 110 uses the first DRMS and/or the first preamble sequence. In this way, when receiving the first DMRS and/or the first preamble sequence, the network device 130 may determine that the first DMRS and/or the first preamble sequence are/is sent by the first terminal device 110, and then find the corresponding first MAS based on the first mapping relationship.

In an optional embodiment, before S220, the method 200 further includes: determining, by the network device 130, the multiplexing resource; and sending, by the network device 130, fifth indication information to the first terminal device 110, where the fifth indication information is used by the first terminal device 110 to determine the multiplexing resource. Optionally, before S220, the method 200 includes: determining, by the first terminal device 110, the multiplexing resource; and the determining, by the first terminal device 110, the multiplexing resource includes: receiving, by the first terminal device 110, fifth indication information sent by the network device 130; and determining the multiplexing resource according to the fifth indication information.

In an optional embodiment, the fifth indication information is used to indicate, to the first terminal device 110, that a first physical resource is the multiplexing resource.

In an optional embodiment, the first terminal device 110 can send the data on all physical resources.

Specifically, the fifth indication information may directly indicate, to the first terminal device 110, that the first physical resource is the multiplexing resource. When the first terminal device 110 is an eMBB terminal device, the eMBB terminal device may occupy all the physical resources by default. When receiving the fifth indication information sent by the network device 130, the eMBB terminal device may determine that the first physical resource is the multiplexing resource, and the remaining physical resources other than the first physical resource are dedicated resources of the eMBB terminal device. In this way, the eMBB terminal device may use different coding manners for data sent on the multiplexing resource and data sent on the dedicated resources. For example, the eMBB terminal device may send the data on the multiplexing resource by using one MAS, and send the data on the dedicated resources by using another MAS. A MAS used to send the data on the multiplexing resource is different from a MAS used to send the data on the dedicated resources. Further, the network device 130 may indicate, to the first terminal device 110, a MAS used by the second terminal device 120 to send the data on the multiplexing resource. In this way, when selecting a MAS, the terminal device may avoid the MAS of the second terminal device 120, and select a MAS different from that of the second terminal device 120 to send the data.

In an optional embodiment, the fifth indication information is further used to indicate, to the first terminal device 110, that a physical resource of the second terminal device 120 is a first physical resource, and indicates that the first terminal device 110 can send the data by using the physical resource of the second terminal device 120, and the first physical resource is the multiplexing resource.

Specifically, by default, the first terminal device 110 and the second terminal device 120 may send data by using different resources. The fifth indication information may further indicate, to the first terminal device 110, that the physical resource of the second terminal device 120 is the first physical resource, and the fifth indication information may further indicate that the first terminal device 110 can send the data by using the physical resource of the second terminal device 120, or the fifth indication information may further indicate that the first terminal device 110 cannot send the data by using the physical resource of the second terminal device 120. In this way, the first terminal device 110 may determine, according to the fifth indication information, whether to use the physical resource of the second terminal device 120 as the multiplexing resource.

S220. The first terminal device 110 sends the first data to a network device 130 on a multiplexing resource between the first terminal device 110 and a second terminal device 120 based on the first MAS, and the network device 130 receives the first data sent by the first terminal device 110 on the multiplexing resource, where the first data is generated based on the first multiple access signature MAS.

Specifically, that the first data is generated based on the first MAS may be as follows: A MAS in the first MAS set may include different sparse code multiple access (sparse code multiple access, SCMA) codebooks. When the first MAS includes a specific SCMA codebook, the first terminal device 110 maps bit data to a multi-dimensional modulation symbol based on the SCMA codebook, in other words, the multi-dimensional modulation symbol is the first data. A MAS in the first MAS set may include different pattern division multiple access (pattern division multiple access, PDMA) spread spectrum patterns. When the first MAS includes a specific PDMA, the first terminal device 110 first maps bit data to a quadrature amplitude modulation (quadrature amplitude modulation, QAM) symbol, and then performs spectrum spreading based on the specific PDMA spread spectrum pattern, to generate the first data. A MAS in the first MAS set may include different multi-user shared access (multiple user share access, MUSA) spread spectrum sequences. When the first MAS includes a specific MUSA spread spectrum sequence, the first terminal device 110 maps bit data to a QAM symbol, and then performs spectrum spreading based on the specific MUSA spread spectrum sequence, to generate the first data. A MAS in the first MAS set may include different interleaver division multiple access (interleaver division multiple access, IDMA) interleaver patterns. When the first MAS includes a specific IDMA, the first terminal device 110 first maps bit data to a QAM symbol, and then performs interleaving based on the specific IDMA interleaver pattern, to generate the first data. A MAS in the first MAS set may include unavailable interleave-grid multiple access (interleave-grid multiple access, IGMA) interleaver patterns. When the first MAS includes a specific IGMA, the first terminal device 110 first maps bit data to a QAM symbol, and then performs interleaving based on the specific IGMA interleaver pattern, to generate the first data.

S230. The second terminal device 120 determines a second MAS for sending second data, where the first MAS and the second MAS include different demodulation reference signals DMRSs and/or different preamble sequences.

In an optional embodiment, before S230, the method 200 includes: sending, by the network device 130, fourth indication information to the second terminal device 120, where the fourth indication information is used to indicate the second MAS set; and S230 includes: determining, by the second terminal device 120, the second MAS set according to the fourth indication information; and determining, by the second terminal device 120, the second MAS in the second MAS set. Optionally, the second MAS set may not be indicated by using the fourth indication information sent by the network device 130, and may be a second MAS set specified in the protocol.

The second terminal device 120 determines the second MAS in the second MAS set in two manners.

In a first manner, the network device 130 sends third indication information to the second terminal device 120, and the third indication information is used to instruct the second terminal device 120 to send the data by using the second MAS in the second MAS set. The second terminal device 120 receives the third indication information sent by the network device 130, and the determining, by the second terminal device 120, the second MAS in the second MAS set includes: determining, by the second terminal device 120, the second MAS in the second set according to the second indication information.

In a second manner, the second terminal device 120 determines the second MAS based on identification information of the second terminal device 120 and a MAS sequence number in the second MAS set.

In an optional embodiment, before S250, the method 200 further includes: determining, by the network device 130, the second MAS of the second terminal device 120. The determining, by the network device 130, the second MAS of the second terminal device 120 includes: determining, by the network device 130, the second MAS based on the second DMRS and/or the second preamble sequence and a second mapping relationship. The second mapping relationship is used to indicate a correspondence between a MAS and a DMRS and/or a preamble sequence that are/is sent by the second terminal device 120.

Specifically, the second terminal device 120 may work in an authorization-free mode, the network device 130 stores the second mapping relationship, and the second mapping relationship indicates the correspondence between a MAS and a DMRS and/or a preamble sequence. When selecting the second MAS, the second terminal device 120 sends the second DMRS and/or the second preamble sequence in the second MAS to the network device 130. When receiving the second DMRS and/or the second preamble sequence, the network device 130 finds, based on the stored second mapping relationship, the second MAS corresponding to the second DMRS and/or the second preamble sequence. It may be understood that the second mapping relationship is used to indicate a mapping relationship between the second DMRS and the second MAS, or the second mapping relationship is used to indicate a mapping relationship between the second preamble sequence and the second MAS, or the second mapping relationship is used to indicate a mapping relationship between the second preamble sequence as well as the second DMRS and the second MAS. Optionally, the protocol may specify that the second terminal device 120 uses the second DRMS and/or the second preamble sequence. In this way, when receiving the second DMRS and/or the second preamble sequence, the network device 130 may determine that the second DMRS and/or the second preamble sequence are/is sent by the second terminal device 120, and then find the corresponding second MAS based on the second mapping relationship.

In an optional embodiment, before S240, the method 200 further includes: determining, by the network device 130, the multiplexing resource; and sending, by the network device 130, sixth indication information to the second terminal device 120, where the sixth indication information is used to instruct the second terminal device 120 to determine the multiplexing resource. Optionally, before S240, the method 200 includes: determining, by the second terminal device 120, the multiplexing resource; and the determining, by the second terminal device 120, the multiplexing resource includes: receiving, by the second terminal device 120, sixth indication information sent by the network device 130; and determining the multiplexing resource according to the sixth indication information.

In an optional embodiment, the sixth indication information is used to indicate, to the second terminal device 120, that the first physical resource is the multiplexing resource.

In an optional embodiment, the second terminal device 120 can send the data on all physical resources.

Specifically, the sixth indication information may directly indicate, to the second terminal device 120, that the first physical resource is the multiplexing resource. The second terminal device 120 may be a URLLC terminal device, and the URLLC terminal device may occupy all the physical resources by default. When receiving the fifth indication information sent by the network device 130, the URLLC terminal device may determine that the first physical resource is the multiplexing resource, and the remaining physical resources other than the first physical resource are dedicated resources of the URLLC terminal device. In this way, the URLLC terminal device may use different coding manners for data sent on the multiplexing resource and data sent on the dedicated resources.

In an optional embodiment, the sixth indication information is used to indicate, to the second terminal device 120, that a physical resource of the first terminal device 110 is a first physical resource, and indicates that the second terminal device 120 can send the data by using the physical resource of the first terminal device 110, and the first physical resource is the multiplexing resource.

Specifically, by default, the first terminal device 110 and the second terminal device 120 may send data by using different resources. The sixth indication information may further indicate, to the second terminal device 120, that the physical resource of the first terminal device 110 is the first physical resource, and the sixth indication information may further indicate that the second terminal device 120 can send the data by using the physical resource of the first terminal device 110, or the sixth indication information may further indicate that the second terminal device 120 cannot send the data by using the physical resource of the first terminal device 110. In this way, the second terminal device 120 may determine, according to the sixth indication information, whether to use the physical resource of the first terminal device 110 as the multiplexing resource.

S240. The second terminal device 120 sends the second data to the network device 130 on the multiplexing resource based on the second MAS, and the network device 130 receives the second data sent by the second terminal device 120 on the multiplexing resource, where the second data is generated based on the second MAS.

Specifically, that the second data is generated based on the second MAS may be as follows: A MAS in the second MAS set may include different SCMA codebooks. When the second MAS includes a specific SCMA codebook, the second terminal device 120 maps bit data to a multi-dimensional modulation symbol based on the SCMA codebook, in other words, the multi-dimensional modulation symbol is the second data. A MAS in the second MAS set may include different PDMA spread spectrum patterns. When the second MAS includes a specific PDMA, the second terminal device 120 first maps bit data to a QAM symbol, and then performs spectrum spreading based on the specific PDMA spread spectrum pattern, to generate the second data. A MAS in the second MAS set may include different MUSA spread spectrum sequences. When the second MAS includes a specific MUSA spread spectrum sequence, the second terminal device 120 maps bit data to a QAM symbol, and then performs spectrum spreading based on the specific MUSA spread spectrum sequence, to generate the second data. A MAS in the second MAS set may include different IDMA interleaver patterns. When the second MAS includes a specific IDMA, the second terminal device 120 first maps bit data to a QAM symbol, and then performs interleaving based on the specific IDMA interleaver pattern, to generate the second data. A MAS in the second MAS set may include unavailable IGMA interleaver patterns. When the second MAS includes a specific IGMA, the second terminal device 120 first maps bit data to a QAM symbol, and then performs interleaving based on the specific IGMA interleaver pattern, to generate the second data.

S250. The network device 130 detects, based on the first MAS and the second MAS, the first data and the second data that are sent on the multiplexing resource.

In an optional embodiment, S250 includes: detecting, by the network device 130 based on the first MAS and the second MAS by using a message passing algorithm MPA, the first data and the second data that are sent on the multiplexing resource. The network device 130 may detect, based on the first MAS and the second MAS by using the MPA, the first data and the second data that are sent on the multiplexing resource, or may certainly detect, by using another algorithm, the first data and the second data that are sent on the multiplexing resource. This is not limited in this embodiment of this application.

For example, when the first terminal device 110 is an eMBB terminal device, and the second terminal device 120 is a URLLC terminal device, the network device 130 receives a symbol y(t) on a $t^{th}$ resource element (resource element, RE), which may be expressed by using the following formula (1):

$$y(t) = \sum_{i \in C_1} h_i(t) x_i(t) + \sum_{j \in C_2} h_j(t) x_j(t) + n(t) \tag{1},$$

where

$C_1$ and $C_2$ are respectively codebook numbers of the eMBB terminal device and the URLLC terminal device, $h_i(t)$ represents a channel gain of the eMBB terminal device, $h_j(t)$ represents a channel gain of the URLLC terminal device, $x_i(t)$ represents a symbol sent by an $i^{th}$ codebook of the eMBB terminal device on the $t^{th}$ RE, $x_j(t)$ represents a symbol sent by a $j^{th}$ codebook of the URLLC terminal device on the $t^{th}$ RE, and n(t) represents noise. Based on the received symbol y(t), the network device 130 determines $h_i(t)$ based on the DMRS and/or the preamble sequence that are/is included in the first MAS, determines $h_j(t)$ based on the DMRS and/or the preamble sequence that are/is included in the second MAS, and obtains $x_i(t)$ and $x_j(t)$ based on the MPA or by using another method.

In an optional embodiment, the first terminal device 110 is an enhanced mobile broadband eMBB terminal device, and the second terminal device 120 is an ultra-reliable and low latency communications URLLC terminal device. In this way, the eMBB terminal device needs to occupy a relatively large quantity of resources while increasing a system capacity, for example, may occupy all the physical resources. When the URLLC terminal device sends data on some physical resources, a DMRS in the MAS used by the eMBB terminal device is different from a DMRS in the MAS used by the URLLC terminal device, and/or a preamble sequence in the MAS used by the eMBB terminal device is different from a preamble sequence in the MAS used by the URLLC terminal device. In this way, the network device 130 may detect the first data and the second data that are received on the multiplexing resource. Therefore, data transmission performance can be improved while a key performance indicator of the URLLC terminal device is met.

It should be understood that a sequence of performing S210, S220, S230, and S240 in the method 200 may not be related to a sequence number. For example, S210 and S220 may be simultaneously performed, and S220 and S240 may be simultaneously performed. In other words, the first terminal device 110 and the second terminal device 120 may simultaneously send the first data and the second data on the multiplexing resource, and the network device 130 may receive the first data and the second data on the multiplexing resource.

It should be understood that the first MAS set and the second MAS set mentioned in this embodiment of this application each include a plurality of MASs, and each MAS includes a DMRS and/or a preamble sequence and at least one of the following five items: a codebook (or a codeword), a sequence (Sequence), an interleaver pattern (Interleaver pattern), a mapping pattern (mapping pattern), a spatial dimension (Spatial-dimension), and a power dimension (Power-dimension). Each MAS includes different DMRSs and/or different preamble sequences, and elements included in each MAS except the DMRSs and the preamble sequences may be the same or different. This is not limited in this embodiment of this application.

It should be understood that in this embodiment of this application, the first terminal device 110 may send the first data, or may send the first DMRS and/or the first preamble sequence. The second terminal device 120 may send the second data, or may send the second DMRS and/or the second preamble sequence. Herein, the data sent by either of the terminal devices may be sent together with the DMRS. Alternatively, the data and the DMRS may be separately sent, and the DMRS is sent before the data. Alternatively, the DMRS and the preamble sequence are simultaneously sent before the data. A sending manner is not limited in this embodiment of this application.

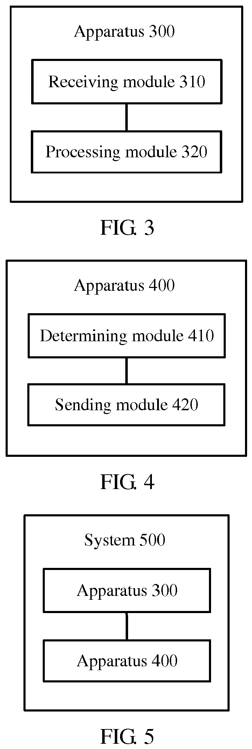

FIG. 3 shows a data transmission apparatus 300 according to an embodiment of this application. The apparatus 300 may be the network device 130 in the method 200, and the apparatus 300 includes:

a receiving module 310, configured to receive first data sent by a first terminal device 110 on a multiplexing resource, where the first data is generated based on a first multiple access signature MAS, where the receiving module 310 is further configured to receive second data sent by a second terminal device 120 on the multiplexing resource, where the second data is generated based on a second MAS, and the first MAS and the second MAS include different demodulation reference signals DMRSs and/or different preamble sequences; and

a processing module 320, configured to detect, based on the first MAS and the second MAS, the first data and the second data that are sent on the multiplexing resource.

In an optional embodiment, the processing module 320 is further configured to determine the first MAS of the first terminal device before the first data sent by the first terminal device 110 on the multiplexing resource is received.

In an optional embodiment, the receiving module 310 is further configured to receive a first DMRS and/or a first preamble sequence that are/is sent by the first terminal device 110; and the processing module 320 is specifically configured to determine the first MAS based on the first DMRS and/or the first preamble sequence and a first mapping relationship, where the first mapping relationship is used to indicate a correspondence between a MAS and a DMRS and/or a preamble sequence that are/is sent by the first terminal device 110.

In an optional embodiment, the apparatus 300 further includes a first sending module, configured to send first indication information to the first terminal device 110, where the first indication information is used to instruct the first terminal device 110 to send the data by using the first MAS in a first MAS set.

In an optional embodiment, the first sending module is configured to send second indication information to the first terminal device 110 before sending the first indication information to the first terminal device 110, where the second indication information is used to indicate the first MAS set.

In an optional embodiment, the processing module 320 is further configured to determine the second MAS of the second terminal device 120 before the second data sent by the second terminal device 120 on the multiplexing resource is received.

In an optional embodiment, the receiving module 310 is further configured to receive a second DMRS and/or a second preamble sequence that are/is sent by the second terminal device 120; and the processing module 320 is further specifically configured to determine the second MAS based on the second DMRS and/or the second preamble sequence and a second mapping relationship, where the second mapping relationship is used to indicate a correspondence between a MAS and a DMRS and/or a preamble sequence that are/is sent by the second terminal device 120.

In an optional embodiment, the apparatus 300 further includes a second sending module, configured to send third indication information to the second terminal device 120, where the third indication information is used to instruct the second terminal device 120 to send the data by using the second MAS in a second MAS set.

In an optional embodiment, the second sending module is further configured to send fourth indication information to the second terminal device 120 before sending the third indication information to the second terminal device 120, where the fourth indication information is used to indicate the second MAS set.

In an optional embodiment, the processing module 320 is further configured to determine the multiplexing resource before the first data sent by the first terminal device 110 on the multiplexing resource is received; and the apparatus further includes a third sending module, configured to send fifth indication information to the first terminal device 110, where the fifth indication information is used by the first terminal device 110 to determine the multiplexing resource; and/or the third sending module is further configured to send sixth indication information to the second terminal device 120, where the sixth indication information is used to instruct the second terminal device 120 to determine the multiplexing resource.

In an optional embodiment, the fifth indication information is used to indicate, to the first terminal device 110, that a first physical resource is the multiplexing resource, and the sixth indication information is used to indicate, to the second terminal device 120, that the first physical resource is the multiplexing resource.

In an optional embodiment, the first terminal device 110 can send the data on all physical resources, and/or the second terminal device 120 can send the data on all physical resources.

In an optional embodiment, the fifth indication information is further used to indicate, to the first terminal device 110, that a physical resource of the second terminal device 120 is a first physical resource, and indicates that the first terminal device 110 can send the data by using the physical resource of the second terminal device 120, and the first physical resource is the multiplexing resource.

In an optional embodiment, the sixth indication information is used to indicate, to the second terminal device 120, that a physical resource of the first terminal device 110 is a first physical resource, and indicates that the second terminal device 120 can send the data by using the physical resource of the first terminal device 110, and the first physical resource is the multiplexing resource.

In an optional embodiment, the processing module 320 is further specifically configured to detect, based on the first MAS and the second MAS by using a message passing algorithm MPA, the first data and the second data that are sent on the multiplexing resource.

In an optional embodiment, the first terminal device 110 is an enhanced mobile broadband eMBB terminal device, and the second terminal device 120 is an ultra-reliable and low latency communications URLLC terminal device.

FIG. 4 shows a data transmission apparatus 400 according to an embodiment of this application. The apparatus 400 may be the first terminal device 110 or the second terminal device 120 in the method 200, and the apparatus 400 includes:

a determining module 410, configured to determine a first multiple access signature MAS for sending first data; and a sending module 420, configured to send the first data to a network device 130 on a multiplexing resource between the apparatus and a second terminal device 120 based on the first MAS, where a second MAS of the second terminal device 120 and the first MAS include different demodulation reference signals DMRSs and/or different preamble sequences.

In an optional embodiment, the apparatus 400 further includes a first receiving module, configured to: before the first multiple access signature MAS for sending the first data is determined, receive second indication information sent by the network device 130, where the second indication information is used to indicate a first MAS set; and the determining module 420 is specifically configured to: determine the first MAS set according to the second indication information; and determine the first MAS in the first MAS set.

In an optional embodiment, the first receiving module is further configured to receive first indication information sent by the network device 130, where the first indication information is used by the apparatus to send the data by using the first MAS in the first MAS set; and the determining module 420 is further specifically configured to determine the first MAS in the first MAS set according to the first indication information.

In an optional embodiment, the determining module 420 is further specifically configured to determine the first MAS based on identification information of the apparatus 400 and a MAS sequence number in the first MAS set.

In an optional embodiment, the determining module 420 is further configured to determine the multiplexing resource before the first data is sent to the network device 130 on the multiplexing resource between the apparatus and the second terminal device 120 based on the first MAS.

In an optional embodiment, the apparatus 400 further includes a second receiving module, configured to receive fifth indication information sent by the network device 130; and the determining module 420 is further specifically configured to determine the multiplexing resource according to the fifth indication information.

In an optional embodiment, the fifth indication information is used to indicate, to the apparatus, that a first physical resource is the multiplexing resource; and the determining module 420 is further specifically configured to determine, according to the fifth indication information, that the first physical resource is the multiplexing resource.

In an optional embodiment, the apparatus 400 can send the data on all physical resources, and/or the second terminal device 120 can send data on all physical resources.

In an optional embodiment, the fifth indication information is further used to indicate, to the apparatus 400, that a physical resource of the second terminal device 120 is a first physical resource, and indicates that the apparatus 400 can send the data by using the physical resource of the second terminal device 120, and the first physical resource is the multiplexing resource.

In an optional embodiment, the apparatus 400 is an enhanced mobile broadband eMBB terminal device, and the second terminal device 120 is an ultra-reliable and low latency communications URLLC terminal device.

In an optional embodiment, the apparatus 400 is a URLLC terminal device, and the second terminal device 120 is an eMBB terminal device.

FIG. 5 shows a data transmission system 500 according to an embodiment of this application. The system 500 includes the apparatus 300 and the apparatus 400.

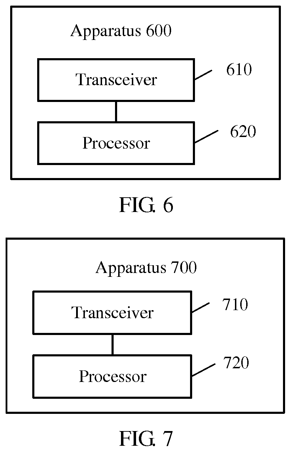

FIG. 6 is a schematic block diagram of a data transmission apparatus 600 according to an embodiment of this application. For example, the apparatus may be the network device 130 in the method 100. The apparatus 600 includes a transceiver 610 and a processor 620.

The transceiver 610 is configured to receive first data sent by a first terminal device 110 on a multiplexing resource, where the first data is generated based on a first multiple access signature MAS. The transceiver 610 is further configured to receive second data sent by a second terminal device 120 on the multiplexing resource, where the second data is generated based on a second MAS, and the first MAS and the second MAS include different demodulation reference signals DMRSs and/or different preamble sequences. The processor 620 is configured to detect, based on the first MAS and the second MAS, the first data and the second data that are sent on the multiplexing resource.

It should be understood that the apparatus 600 may correspond to the network device 130 in the method 200, and may implement corresponding functions of the network device 130 in the method 200. For brevity, details are not described herein again.

FIG. 7 is a schematic block diagram of a data transmission apparatus 700 according to an embodiment of this application. The apparatus may be the first terminal device 110 or the second terminal device 120 in the method 200. As shown in FIG. 7, the apparatus 700 includes a transceiver 710 and a processor 720.

The processor 720 is configured to determine a multiple access signature MAS for sending first data. The transceiver 710 is configured to send the first data to a network device 130 on a multiplexing resource between the apparatus and a second terminal device 120 based on the first MAS, where a second MAS of the second terminal device 120 and the first MAS include different demodulation reference signals DMRSs and/or different preamble sequences.

It should be understood that the apparatus 700 may correspond to the first terminal device 110 or the second terminal device 120 in the method 200, and may implement corresponding functions of the first terminal device 110 and the second terminal device 120 in the method 200. For brevity, details are not described herein again.

It should be understood that in the embodiments of this application, the processor 620 and the processor 720 may be a central processing unit (central processing unit, CPU), or the processor may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general purpose processor may be a microprocessor, or the processor may be any conventional processor or the like.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments in this application.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the embodiments of this application essentially, or the part contributing to the prior art, or all or some of the technical solutions may be implemented in the form of a software product. The computer software product is stored in a storage medium and includes several indications for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1. A data transmission method, wherein the method comprises:

   receiving (S220), by a network device, first data sent by a first terminal device on a multiplexing resource, wherein the first data is generated based on a first multiple access signature , MAS;
   receiving (S240), by the network device, second data sent by a second terminal device on the multiplexing resource, wherein the second data is generated based on a second MAS, and the first MAS and the second MAS comprise different demodulation reference signals, DMRSs, and/or different preamble sequences; and
   detecting (S250), by the network device based on the first MAS and the second MAS, the first data and the second data that are sent on the multiplexing resource, and
   the method being **characterized in that**:
   the method further comprises:

   sending, by the network device, first indication information to the first terminal device, wherein the first indication information is used to instruct the first terminal device to send the first data by using the first MAS in a first MAS set; and
   before the sending, by the network device, first indication information to the first terminal device, the method further comprises:
   sending, by the network device, second indication information to the first terminal device, wherein the second indication information is used to indicate the first MAS set.

2. The method according to claim 1, wherein before the receiving, by the network device, the first data sent by the first terminal device on the multiplexing resource, the method further comprises:
   determining, by the network device, the first MAS of the first terminal device.

3. The method according to claim 2, wherein the determining, by the network device, the first MAS of the first terminal device comprises:

   receiving, by the network device, a first DMRS and/or a first preamble sequence that are/is sent by the first terminal device; and
   determining, by the network device, the first MAS based on the first DMRS and/or the first preamble sequence and a first mapping relationship, wherein the first mapping relationship is used to indicate a correspondence between the first MAS and the first DMRS and/or the first preamble sequence that are/is sent by the first terminal device.

4. A data transmission method, wherein the method comprises:

   determining (S210), by a first terminal device, a first multiple access signature, MAS, for sending first data; and
   sending (S220), by the first terminal device, the first data to a network device on a multiplexing resource between the first terminal device and a second terminal device based on the first MAS, wherein the second terminal device generates second data based on a second MAS and sends said second data on the multiplexing resource, and wherein the second MAS of the second terminal device and the first MAS comprise different demodulation reference signals DMRSs and/or different preamble sequences, and
   the method being **characterized in that**:

   before the determining, by the first terminal device, the first multiple access signature MAS for sending the first data, the method further comprises:
   receiving, by the first terminal device, second indication information sent by the network device, wherein the second indication information is used to indicate a first MAS set; and
   the determining, by the first terminal device, the firt MAS for sending the first data comprises:

   determining, by the first terminal device, the first MAS set according to the second indication information; and
   determining, by the first terminal device, the first MAS in the first MAS set, and
   wherein the determining, by the first terminal device, the first MAS in the first MAS set comprises:
   receiving, by the first terminal device, first indication information sent by the network device, wherein the first indication information is used by the first terminal device to send the first data by using the first MAS in the first MAS set; and

the determining, by the first terminal device, the first MAS in the first MAS set comprises:

determining, by the first terminal device, the first MAS in the first MAS set according to the first indication information; or
the determining, by the first terminal device, the first MAS in the first MAS set comprises:
determining, by the first terminal device, the first MAS based on identification information of the first terminal device and a MAS sequence number in the first MAS set.

5. A data transmission apparatus, wherein the apparatus comprises:

a receiving module (310), configured to receive first data sent by a first terminal device on a multiplexing resource, wherein the first data is generated based on a first multiple access signature , MAS, wherein
the receiving module (310) is further configured to receive second data sent by a second terminal device on the multiplexing resource, wherein the second data is generated based on a second MAS, and the first MAS and the second MAS comprise different demodulation reference signals , DMRSs, and/or different preamble sequences; and
a processing module (320), configured to detect, based on the first MAS and the second MAS, the first data and the second data that are sent on the multiplexing resource, and
the apparatus being **characterized by** that:
the apparatus further comprises:

a first sending module, configured to send first indication information to the first terminal device, wherein the first indication information is used to instruct the first terminal device to send the first data by using the first MAS in a first MAS set, and
wherein the first sending module is further configured to:
send second indication information to the first terminal device before sending the first indication information to the first terminal device, wherein the second indication information is used to indicate the first MAS set.

6. The apparatus according to claim 5, wherein the processing module (320) is further configured to:
determine the first MAS of the first terminal device before the first data sent by the first terminal device on the multiplexing resource is received.

7. The apparatus according to claim 6, wherein the receiving module is further configured to:

receive a first DMRS and/or a first preamble sequence that are/is sent by the first terminal device; and
the processing module (320) is specifically configured to determine the first MAS based on the first DMRS and/or the first preamble sequence and a first mapping relationship, wherein the first mapping relationship is used to indicate a correspondence between the first MAS and the first DMRS and/or the first preamble sequence that are/is sent by the first terminal device.

8. A data transmission apparatus, wherein the apparatus comprises:

a determining module (410), configured to determine a first multiple access signature, MAS, for sending first data; and
a sending module (420), configured to send the first data to a network device on a multiplexing resource between the apparatus and a second terminal device based on the first MAS, wherein the second terminal device is generating second data based on a second MAS and sending said second data on the multiplexing resource, and wherein the second MAS of the second terminal device and the first MAS comprise different demodulation reference signals, DMRS, and/or different preamble sequences, and
the apparatus being **characterized by** that:
the apparatus further comprises:

a first receiving module, configured to: before the first multiple access signature MAS for sending the first data is determined, receive second indication information sent by the network device, wherein the second indication information is used to indicate a first MAS set; and
the determining module is specifically configured to:

determine the first MAS set according to the second indication information; and
determine the first MAS in the first MAS set, and
wherein the first receiving module is further configured to:

receive first indication information sent by the network device, wherein the first indication information is used by the apparatus to send the first data by using the first MAS in the first MAS set; and
the determining module is further specifically configured to determine the first MAS in the first MAS set according to the first indication information, or
the determining module is further specifically configured to determine the first MAS based on identification information of the apparatus and a MAS sequence number in the first MAS set.

**Patentansprüche**

1. Ein Datenübertragungsverfahren, das Verfahren umfassend:

Empfangen (S220) von ersten Daten, die von einem ersten Endgerät auf einer Multiplexressource gesendet werden, durch ein Netzwerkgerät, wobei die ersten Daten basierend auf einer ersten Mehrfachzugriffssignatur (MAS) erzeugt werden;
Empfangen (S240) von zweiten Daten, die von einem zweiten Endgerät auf der Multiplexressource gesendet werden, durch das Netzwerkgerät, wobei die zweiten Daten basierend auf einer zweiten MAS erzeugt werden und die erste MAS und die zweite MAS unterschiedliche Demodulationsreferenzsignale (DMRS) und/oder unterschiedliche Präambelsequenzen umfassen; und
Erkennen (S250) der ersten Daten und der zweiten Daten, die auf der Multiplexressource gesendet werden, durch das Netzwerkgerät basierend auf der ersten MAS und der zweiten MAS, und das Verfahren **dadurch gekennzeichnet ist, dass**:
das Verfahren ferner umfasst:

Senden einer ersten Anzeigeinformation an das erste Endgerät durch das Netzwerkgerät, wobei die erste Anzeigeinformation verwendet wird, um das erste Endgerät anzuweisen, die ersten Daten unter Verwendung der ersten MAS in einem ersten MAS-Satz zu senden; und
vor dem Senden der ersten Anzeigeinformation an das erste Endgerät durch das Netzwerkgerät das Verfahren ferner umfasst:
Senden einer zweiten Anzeigeinformation an das erste Endgerät durch das Netzwerkgerät, wobei die zweite Anzeigeinformation verwendet wird, um den ersten MAS-Satz anzuzeigen.

2. Verfahren nach Anspruch 1, wobei das Verfahren vor dem Empfangen der ersten Daten, die von dem ersten Endgerät auf der Multiplexressource gesendet werden, durch das Netzwerkgerät ferner umfasst:
Bestimmen der ersten MAS des ersten Endgeräts durch das Netzwerkgerät.

3. Verfahren nach Anspruch 2, wobei das Bestimmen der ersten MAS des ersten Endgeräts durch das Netzwerkgerät umfasst:

Empfangen eines ersten DMRS und/oder einer ersten Präambelsequenz, die von dem ersten Endgerät gesendet wird/werden, durch das Netzwerkgerät; und
Bestimmen der ersten MAS basierend auf dem ersten DMRS und/oder der ersten Präambelsequenz und einer ersten Abbildungsbeziehung durch das Netzwerkgerät, wobei die erste Abbildungsbeziehung verwendet wird, um eine Übereinstimmung zwischen der ersten MAS unddem ersten DMRS und/oder der ersten Präambelsequenz, die von dem ersten Endgerät gesendet wird/werden, anzuzeigen.

4. Ein Datenübertragungsverfahren, das Verfahren umfassend:

Bestimmen (S210) einer ersten Mehrfachzugriffssignatur (MAS) zum Senden von ersten Daten durch ein erstes Endgerät; und
Senden (S220) der ersten Daten an ein Netzwerkgerät auf einer Multiplexressource zwischen dem ersten Endgerät und einem zweiten Endgerät basierend auf der ersten MAS durch das erste Endgerät, wobei das zweite Endgerät zweite Daten basierend auf einer zweiten MAS erzeugt und die zweiten Daten auf der Multiplexressource sendet, und wobei die zweite MAS des zweiten Endgeräts und die erste MAS unterschiedliche Demodulationsreferenzsignale (DMRS) und/oder unterschiedliche Präambelsequenzen umfassen, und das Verfahren **dadurch gekennzeichnet ist, dass**:

vor dem Bestimmen der ersten Mehrfachzugriffssignatur (MAS) zum Senden der ersten Daten durch das erste Endgerät das Verfahren ferner umfasst:

Empfangen einer zweiten Anzeigeinformation, die durch das Netzwerkgerät gesendet wird, durch das erste Endgerät, wobei die zweite Anzeigeinformation verwendet wird, um einen ersten MAS-Satz anzuzeigen; und das Bestimmen der ersten MAS zum Senden der ersten Daten durch das erste Endgerät umfasst:

Bestimmen des ersten MAS-Satzes gemäß der zweiten Anzeigeinformation durch das erste Endgerät; und

Bestimmen der ersten MAS in dem ersten MAS-Satz durch das erste Endgerät, und wobei das Bestimmen der ersten MAS in dem ersten MAS-Satz durch das erste Endgerät umfasst:

Empfangen einer ersten Anzeigeinformation, die von dem Netzwerkgerät gesendet wird, durch das erste Endgerät, wobei die erste Anzeigeinformation vom ersten Endgerät verwendet wird, um die ersten Daten unter Verwendung der ersten MAS in dem ersten MAS-Satz zu senden; und das Bestimmen der ersten MAS in dem ersten MAS-Satz durch das erste Endgerät umfasst:

Bestimmen der ersten MAS in dem ersten MAS-Satz gemäß der ersten Anzeigeinformation durch das erste Endgerät; oder das Bestimmen der ersten MAS in dem ersten MAS-Satz durch das erste Endgerät umfasst: Bestimmen der ersten MAS durch das erste Endgerät basierend auf einer Identifikationsinformation des ersten Endgeräts und einer MAS-Sequenznummer in dem ersten MAS-Satz.

5. Eine Datenübertragungsvorrichtung, die Vorrichtung umfassend:

ein Empfangsmodul (310), das dafür konfiguriert ist, erste Daten zu empfangen, die von einem ersten Endgerät auf einer Multiplexressource gesendet werden, wobei die ersten Daten basierend auf einer ersten Mehrfachzugriffssignatur (MAS) erzeugt werden, wobei das Empfangsmodul (310) ferner dafür konfiguriert ist, zweite Daten zu empfangen, die von einem zweiten Endgerät auf der Multiplexressource gesendet werden, wobei die zweiten Daten basierend auf einer zweiten MAS erzeugt werden und die erste MAS und die zweite MAS unterschiedliche Demodulationsreferenzsignale (DMRS) und/oder unterschiedliche Präambelsequenzen umfassen; und

ein Verarbeitungsmodul (320), das dafür konfiguriert ist, die ersten Daten und die zweiten Daten, die auf der Multiplexressource gesendet werden, basierend auf der ersten MAS und der zweiten MAS zu erkennen und die Vorrichtung **dadurch gekennzeichnet ist, dass**:

die Vorrichtung ferner umfasst:

ein erstes Sendemodul, das dafür konfiguriert ist, eine erste Anzeigeinformation an das erste Endgerät zu senden, wobei die erste Anzeigeinformation verwendet wird, um das erste Endgerät anzuweisen, die ersten Daten unter Verwendung der ersten MAS in einem ersten MAS-Satz zu senden, und wobei das erste Sendemodul ferner dafür konfiguriert ist:

eine zweite Anzeigeinformation an das erste Endgerät zu senden, bevor es die erste Anzeigeinformation an das erste Endgerät sendet, wobei die zweite Anzeigeinformation verwendet wird, um den ersten MAS-Satz anzuzeigen.

6. Vorrichtung nach Anspruch 5, wobei das Verarbeitungsmodul (320) ferner dafür konfiguriert ist:
die erste MAS des ersten Endgeräts zu bestimmen, bevor die ersten Daten, die vom ersten Endgerät auf der Multiplexressource gesendet werden, empfangen werden.

7. Vorrichtung nach Anspruch 6, wobei das Empfangsmodul ferner dafür konfiguriert ist:

ein erstes DMRS und/oder eine erste Präambelsequenz zu empfangen, die vom ersten Endgerät gesendet wird/werden; und

das Verarbeitungsmodul (320) speziell dafür konfiguriert ist, die erste MAS basierend auf dem ersten DMRS und/oder der ersten Präambelsequenz und einer ersten Abbildungsbeziehung zu bestimmen, wobei die erste Abbildungsbeziehung verwendet wird, um eine Übereinstimmung zwischen der ersten MAS und dem ersten DMRS und/oder der ersten Präambelsequenz anzuzeigen, die vom ersten Endgerät gesendet wird/werden.

**8.** Eine Datenübertragungsvorrichtung, die Vorrichtung umfassend:

ein Bestimmungsmodul (410), das dafür konfiguriert ist, eine erste Mehrfachzugriffssignatur (MAS) zum Senden von ersten Daten zu bestimmen; und

ein Sendemodul (420), das dafür konfiguriert ist, die ersten Daten an ein Netzwerkgerät auf einer Multiplexressource zwischen der Vorrichtung und einem zweiten Endgerät basierend auf der ersten MAS zu senden, wobei das zweite Endgerät zweite Daten basierend auf einer zweiten MAS erzeugt und die zweiten Daten auf der Multiplexressource sendet, und wobei die zweite MAS des zweiten Endgeräts und die erste MAS unterschiedliche Demodulationsreferenzsignale (DMRS) und/oder unterschiedliche Präambelsequenzen umfassen, und die Vorrichtung **dadurch gekennzeichnet ist, dass**:
die Vorrichtung ferner umfasst:
ein erstes Empfangsmodul, dass dafür konfiguriert ist:

bevor die erste Mehrfachzugriffssignatur (MAS) zum Senden der ersten Daten bestimmt wird, eine zweite Anzeigeinformation zu empfangen, die vom Netzwerkgerät gesendet wird, wobei die zweite Anzeigeinformation verwendet wird, um einen ersten MAS-Satz anzuzeigen; und
das Bestimmungsmodul speziell dafür konfiguriert ist:

den ersten MAS-Satz gemäß der zweiten Anzeigeinformation zu bestimmen; und
die erste MAS in dem ersten MAS-Satz zu bestimmen, und wobei das erste Empfangsmodul ferner dafür konfiguriert ist:

eine erste Anzeigeinformation zu empfangen, die vom Netzwerkgerät gesendet wird, wobei die erste Anzeigeinformation von der Vorrichtung verwendet wird, um die ersten Daten unter Verwendung der ersten MAS im ersten MAS-Satz zu senden; und
das Bestimmungsmodul ferner speziell dafür konfiguriert ist, die erste MAS im ersten MAS-Satz gemäß der ersten Anzeigeinformation zu bestimmen, oder das Bestimmungsmodul ferner speziell dafür konfiguriert ist, die erste MAS basierend auf einer Identifikationsinformation der Vorrichtung und einer MAS-Sequenznummer in dem ersten MAS-Satz zu bestimmen.

## Revendications

**1.** Procédé de transmission de données, dans lequel le procédé comprend :

la réception (S220), par un dispositif de réseau, de premières données envoyées par un premier dispositif terminal sur une ressource de multiplexage, les premières données étant générées en fonction d'une première signature d'accès multiple, MAS ;
la réception (S240), par le dispositif de réseau, de secondes données envoyées par un second dispositif terminal sur la ressource de multiplexage, les secondes données étant générées en fonction d'une seconde MAS, la première MAS et la seconde MAS comprenant différents signaux de référence de démodulation, DMRS et/ou différentes séquences de préambules ; et
la détection (S250), par le dispositif de réseau en fonction de la première MAS et de la seconde MAS, des premières données et des secondes données qui sont envoyées sur la ressource de multiplexage et le procédé étant **caractérisé en ce que** :
le procédé comprend en outre :

l'envoi, par le dispositif de réseau, de premières informations d'indication au premier dispositif terminal, les premières informations d'indication étant utilisées pour ordonner au premier dispositif terminal d'envoyer les premières données à l'aide de la première MAS dans un premier ensemble de MAS ; et
avant l'envoi, par le dispositif de réseau, de premières informations d'indication au premier dispositif terminal, le procédé comprend en outre :
l'envoi par le dispositif de réseau, de secondes informations d'indication au premier dispositif terminal, les secondes informations d'indication étant utilisées pour indiquer le premier ensemble de MAS.

**2.** Procédé selon la revendication 1, dans lequel avant la réception, par le dispositif de réseau, des premières données envoyées par le premier dispositif terminal sur la ressource de multiplexage, le procédé comprend en outre :
la détermination, par le dispositif de réseau, de la première MAS du premier dispositif terminal.

**3.** Procédé selon la revendication 2, dans lequel la détermination, par le dispositif de réseau, de la première MAS du premier dispositif terminal comprend :

la réception, par le dispositif de réseau, d'un premier DMRS et/ou d'une première séquence de préambules qui sont envoyés par le premier dispositif terminal ; et
la détermination, par le dispositif de réseau, de la première MAS en fonction du premier DMRS et/ou de la première séquence de préambules et d'une première relation de mappage, la première relation de mappage étant utilisée pour indiquer une correspondance entre la première MAS et ;
le premier DMRS et/ou ;
la première séquence de préambules qui est/sont envoyé(e)/envoyés par le premier dispositif terminal.

**4.** Procédé de transmission de données, dans lequel le procédé comprend :

la détermination (S210), par un premier dispositif terminal, d'une première signature d'accès multiple, MAS, destinée à envoyer de premières données ; et
l'envoi (S220), par le premier dispositif terminal, des premières données à un dispositif de réseau sur une ressource de multiplexage entre le premier dispositif terminal et un second dispositif terminal en fonction de la première MAS, le second dispositif terminal générant des secondes données en fonction d'une seconde MAS et envoyant lesdites secondes données sur la ressource de multiplexage et la seconde MAS du second dispositif terminal et la première MAS comprenant différents signaux de référence de démodulation DMRS et/ou différentes séquences de préambules et le procédé étant **caractérisé en ce que** :
avant la détermination, par le premier dispositif terminal, de la première signature d'accès multiple, MAS, destinée à envoyer les premières données, le procédé comprend en outre :

la réception, par le premier dispositif terminal, des secondes informations d'indication envoyées par le dispositif de réseau, les secondes informations d'indication étant utilisées pour indiquer un premier ensemble de MAS ; et
la détermination, par le premier dispositif terminal, de la première MAS destinée à envoyer les premières données comprend :

la détermination, par le premier dispositif terminal, du premier ensemble de MAS selon les secondes informations d'indication ; et
la détermination, par le premier dispositif terminal, de la première MAS dans le premier ensemble de MAS et la détermination, par le premier dispositif terminal, de la première MAS dans le premier ensemble de MAS comprenant :

la réception, par le premier dispositif terminal, des premières informations d'indication envoyées par le dispositif de réseau, les premières informations d'indication étant utilisées par le premier dispositif terminal pour envoyer les premières données à l'aide de la première MAS dans le premier ensemble de MAS ; et
la détermination, par le premier dispositif terminal, de la première MAS dans le premier ensemble de MAS comprend :

la détermination, par le premier dispositif terminal, de la première MAS dans le premier ensemble de MAS selon les premières informations d'indication ; ou
la détermination, par le premier dispositif terminal, de la première MAS dans le premier ensemble de MAS comprend :
la détermination, par le premier dispositif terminal, de la première MAS en fonction des informations d'identification du premier dispositif terminal et d'un numéro de séquence de MAS dans le premier ensemble de MAS.

**5.** Appareil de transmission de données, dans lequel l'appareil comprend :

un module de réception (310), configuré pour recevoir les premières données envoyées par un premier dispositif terminal sur une ressource de multiplexage, les premières données étant générées en fonction d'une première signature d'accès multiple, MAS, le module de réception (310) étant en outre configuré pour recevoir des secondes données envoyées par un second dispositif terminal sur la ressource de multiplexage, les secondes données étant générées en fonction d'une seconde MAS et la première MAS et la seconde MAS comprenant différents signaux de référence de démodulation, DMRS et/ou différentes séquences de préambules ; et
un module de traitement (320), configuré pour détecter, en fonction de la première MAS et de la seconde MAS, les premières données et les secondes données qui sont envoyées sur la ressource de multiplexage et l'appareil étant **caractérisé en ce que** :
l'appareil comprend en outre :
un premier module d'envoi, configuré pour envoyer de premières informations d'indication au premier dispositif terminal, les premières informations d'indication étant utilisées pour ordonner au premier dispositif terminal d'envoyer les premières données à l'aide de la première MAS dans un premier ensemble de MAS et le premier module d'envoi étant configuré en outre pour :
envoyer de secondes informations d'indication au premier dispositif terminal avant d'envoyer les premières informations d'indication au premier dispositif terminal, les secondes informations d'indication étant utilisées pour indiquer le premier ensemble de MAS.

6. Appareil selon la revendication 5, dans lequel le module de traitement (320) est en outre configuré pour :
déterminer la première MAS du premier dispositif terminal avant la réception des premières données envoyées par le premier dispositif terminal sur la ressource de multiplexage.

7. Appareil selon la revendication 6, dans lequel le module de réception est en outre configuré pour :

recevoir un premier DMRS et/ou une première séquence de préambules qui est/sont envoyé(e)/envoyés par le premier dispositif terminal ; et
le module de traitement (320) est plus particulièrement configuré pour déterminer la première MAS en fonction du premier DMRS et/ou de la première séquence de préambules et une première relation de mappage, la première relation de mappage étant utilisée pour indiquer une correspondance entre la première MAS et le premier DMRS et/ou la première séquence de préambules qui est/sont envoyé(e)/envoyés par le premier dispositif terminal.

8. Appareil de transmission de données, dans lequel l'appareil comprend :

un module de détermination (410), configuré pour déterminer une première signature d'accès multiple, MAS, destinée à envoyer les premières données ; et
un module d'envoi (420), configuré pour envoyer les premières données à un dispositif de réseau sur une ressource de multiplexage entre l'appareil et un second dispositif terminal en fonction de la première MAS, le second dispositif terminal générant des secondes données en fonction d'une seconde MAS et envoyant desdites secondes données sur la ressource de multiplexage et la seconde MAS du second dispositif terminal et la première MAS comprenant différents signaux de référence de démodulation,
DMRS, et/ou différentes séquences de préambules et l'appareil étant **caractérisé en ce que** :
l'appareil comprend en outre :
un premier module de réception, configuré pour :

avant la détermination de la première signature d'accès multiple MAS destinée à envoyer les premières données, recevoir de secondes informations d'indication envoyées par le dispositif de réseau, les secondes informations d'indication étant utilisées pour indiquer un premier ensemble de MAS ; et
le module de détermination est plus particulièrement configuré pour :

déterminer le premier ensemble de MAS selon les secondes informations d'indication ; et
déterminer la première MAS dans le premier ensemble de MAS et le premier module de réception étant en outre configuré pour :

recevoir de premières informations d'indication envoyées par le dispositif de réseau, les premières informations d'indication étant utilisées par l'appareil pour envoyer les premières données à l'aide de la première MAS dans le premier ensemble de MAS ; et
le module de détermination est en outre plus particulièrement configuré pour déterminer la première MAS dans le premier ensemble de MAS selon les premières informations d'indication, ou le module de détermination est en outre plus particulièrement configuré pour déterminer la première MAS en fonction des informations d'identification de l'appareil et d'un numéro de séquence de MAS dans le premier ensemble de MAS.

100

Network
device 130

First terminal
device 110

Second terminal
device 120

FIG. 1

200

| First terminal device 110 | Second terminal device 120 | Network device 130 |

S210. Determine a
first MAS

S220. First data

S230. Determine a
second MAS

S240. Second data

S250. Detect the first
data and the second data

FIG. 2

Apparatus 300

Receiving module 310

Processing module 320

FIG. 3

Apparatus 400

Determining module 410

Sending module 420

FIG. 4

System 500

Apparatus 300

Apparatus 400

FIG. 5

Apparatus 600

Transceiver — 610

Processor — 620

FIG. 6

Apparatus 700

Transceiver — 710

Processor — 720

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710008129

**Non-patent literature cited in the description**

- Considerations on pre-configured resource for grant-free based UL non-orthogonal MA. *3GPP DRAFT; Rl-1608919, RAN WG1,* October 2016

- **LG ELECTRONICS.** Discussion on feedback signaling for grant-free MA. *3GPP DRAFT; R1-1609226, RAN WG1,* October 2016